# EUROPÄISCHE PATENTSCHRIFT

(11) **EP 0 627 345 B1**
(45) Veröffentlichungstag und Bekanntmachung des Hinweises auf die Patenterteilung: **19.03.1997**
(21) Anmeldenummer: 94106475.0
(22) Anmeldetag: 26.04.1994
(51) Int. Cl.: B60R 22/46, F16F 1/14

(54) **Sicherheitsgurtaufroller**
Safety belt retractor
Enrouleur de ceinture de sécurité

(30) Priorität: 05.05.1993 DE 4314883
(43) Veröffentlichungstag der Anmeldung: 07.12.1994
(73) Patentinhaber: TRW Occupant Restraint Systems GmbH, 73553 Alfdorf (DE)
(72) Erfinder: Ebner, Ralf, D-74417 Gschwend (DE); Grout, John, D-73553 Alfdorf (DE); Holzapfel, Volker, D-66606 St. Wendel (DE); Müller, Albrecht, D-73568 Durlangen (DE); Weyhmüller, Günter, D-83364 Vordersteinenberg (DE)
(74) Vertreter: Degwert, Hartmut, Dipl.-Phys.

(56) Entgegenhaltungen:
- EP-A- 0 562 423
- DE-A- 3 600 004
- US-A- 3 942 819

## Beschreibung

Die Erfindung betrifft einen Sicherheitsgurtaufroller gemäß der in dem Oberbegriff des Patentanspruchs 1 angegebenen und aus der US-A-3,942,819 bekannten Art.

Bei einem aus der DE 36 00 004 C2 bekannten Gurtaufroller mit einer in einem Gehäuse drehbar gelagerten Gurtspule und einem Strafferantrieb zur Drehung der Gurtspule in Aufwickelrichtung ist nach erfolgter Gurtstraffung die Gurtspule blockiert. Es wurde bereits versucht, die Schutzwirkung von mit Gurtstraffern ausgerüsteten Sicherheitsgurtsystemen zu steigern, indem nach erfolgter Gurtstraffung eine Energiewandlung vorgenommen wird, um Lastspitzen im Gurtband abzubauen. Eine Energiewandlung ist beispielsweise durch Streckglieder möglich, die in den Kraftschluß des Gurtsystems eingefügt sind und unter Last plastisch verformt werden.

Aus der EP-A-0 562 423 ist ein Gurtaufroller mit an der Gurtspule über einen Kupplungsmechanismus angreifendem Gurtstraffer bekannt, bei dem ein Torsionsstab in den Kraftfluß zwischen dem Kupplungsmechanismus und der Gurtspule eingefügt ist, der nach erfolgter Gurtstraffung unter der über das Gurtband eingeleiteten Last energieverzehrend um seine Achse verdrillt wird, wodurch die Lastspitzen im Gurtsystem absorbiert werden. Bei dem Kupplungsmechanismus handelt es sich um einen Klemmrollen-Kupplungsmechanismus. Die Druckschrift EP-A-0 562 423 fällt unter Artikel 54 (3) EPÜ und ist daher nur für die Neuheit der Erfindung relevant.

Aus der US-A-3 942 819 ist ein Gurtaufroller gemäß der in dem Oberbegriff des Patentanspruchs 1 angegebenen Art bekannt, bei dem ebenfalls ein Torsionsstab zum Abbauen von Lastspitzen benutzt wird. Die Gurtstraffung erfolgt bei diesem Gurtaufroller mit Hilfe eines Kolben/Zylinder-Antriebs, wobei ein an der Gurtspule ausgebildeter Zapfen durch den Kolben angetrieben und die Gurtspule dadurch in Drehung versetzt wird.

Der erfindungsgemäße Gurtaufroller umfaßt eine drehbar in einem Gehäuse gelagerte Gurtspule und einen Strafferantrieb zur Drehung der Gurtspule in Aufwickelrichtung, wobei ein axiales Ende eines Torsionsstabes drehfest an die Gurtspule angeschlossen ist und nach erfolgter Gurtstraffung der Torsionsstab an seinem anderen axialen Ende durch einen Blockiermechanismus gegen Drehung in Abwickelrichtung am Gehäuse blockiert sowie durch Drehung der Gurtspule unter Last zwischen seinen axialen Enden tordierbar ist, dadurch gekennzeichnet, daß der Strafferantrieb an dem anderen axialen Ende des Torsionsstabes angreift, und daß der Blockiermechanismus eine Klinkenkupplung aufweist. Ein solcher Torsionsstab läßt nach erfolgter Gurtstraffung eine Rückdrehung der Gurtspule um einen Drehwinkel zu, der für die beabsichtigte Energiewandlung mehr als ausreichend ist. Torsionsstäbe aus geeigneten Stahlsorten lassen eine Verdrillung um mehr als 360° zwischen den beiden axialen Enden des Torsionsstabes zu. Der Strafferantrieb wird über eine Klinkenkupplung an die Gurtspule angekoppelt, nach erfolgter Gurtstraffung aber wieder abgekoppelt, so daß die Gurtspule frei drehbar ist und der fahrzeugsensitive Sperrmechanismus voll funktionsfähig bleibt. Eine Klinkenkupplung hat den Vorteil, daß sie sich nach Belastung leichter lösen läßt als eine Klemmrollenkupplung.

Durch die gemäß einer vorteilhaften Ausführungsform eines Gurtaufrollers mit fahrzeugsensitivem Sperrsystem vorgesehene drehmomentbegrenzende Kupplung zwischen der Steuerscheibe und der Gurtspule wird die Steuerscheibe von der Gurtspule ab einer bestimmten Belastung entkoppelt, so daß die durch den fahrzeugsensitiven Sensor blockierte Steuerscheibe bei Drehung der Gurtspule in Abwickelrichtung nicht zerstört wird und anschließend die Funktionsfähigkeit des fahrzeugsensitiven Sperrmechanismus erhalten bleibt.

Weitere Merkmale und Vorteile der Erfindung ergeben sich aus der Beschreibung mehrerer Ausführungsformen der Erfindung und aus der Zeichnung, auf die Bezug genommen wird. In der Zeichnung zeigen:
- Fig. 1 eine perspektivische Explosionsdarstellung einer ersten Ausführungsform des Gurtaufrollers mit Gurtstraffer ohne die Funktionsteile für die Ansteuerung des Sperrmechanismus;

- Fig. 2: einen Axialschnitt des Gurtaufrollers von Fig. 1;
- Fig. 3: einen Schnitt entlang der Linie III-III in Fig. 2;
- Fig. 4: eine stark vereinfachte Explosionsansicht des Gurtaufrollers der Erfindung mit Funktionsteilen für die Ansteuerung des Sperrmechanismus;
- Fig. 5: eine Perspektivansicht einer Steuerscheibe;
- Fig. 6: eine perspektivische Ansicht einer zweiten Ausführungsform eines Gurtaufrollers mit Funktionsteilen für die Ansteuerung des Sperrmechanismus in Teilexplosionsansicht;
- Fig. 7: eine stark vereinfachte Explosionsansicht einer dritten Ausführungsform eines Gurtaufrollers mit Funktionsteilen für die Ansteuerung des Sperrmechanismus der Erfindung;
- Fig. 8: eine stark vereinfachte Vorderansicht der Steuerscheibe der in Fig. 7 gezeigten Ausführungsform der Erfindung; und
- Fig. 9: eine perspektivische stark vereinfachte Ansicht der Steuerscheibe der in Fig. 7 gezeigten Ausführungsform der Erfindung.

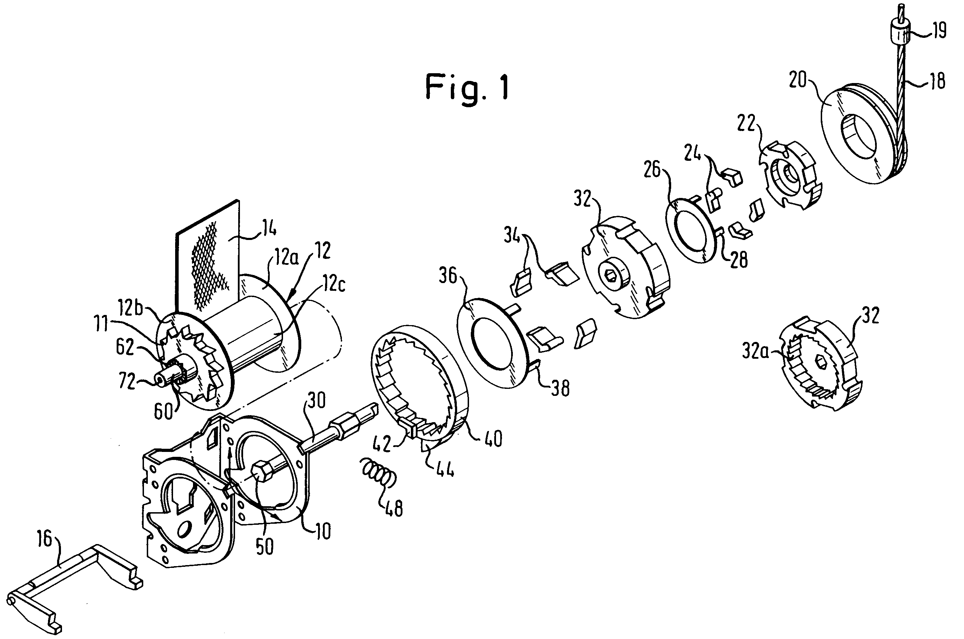

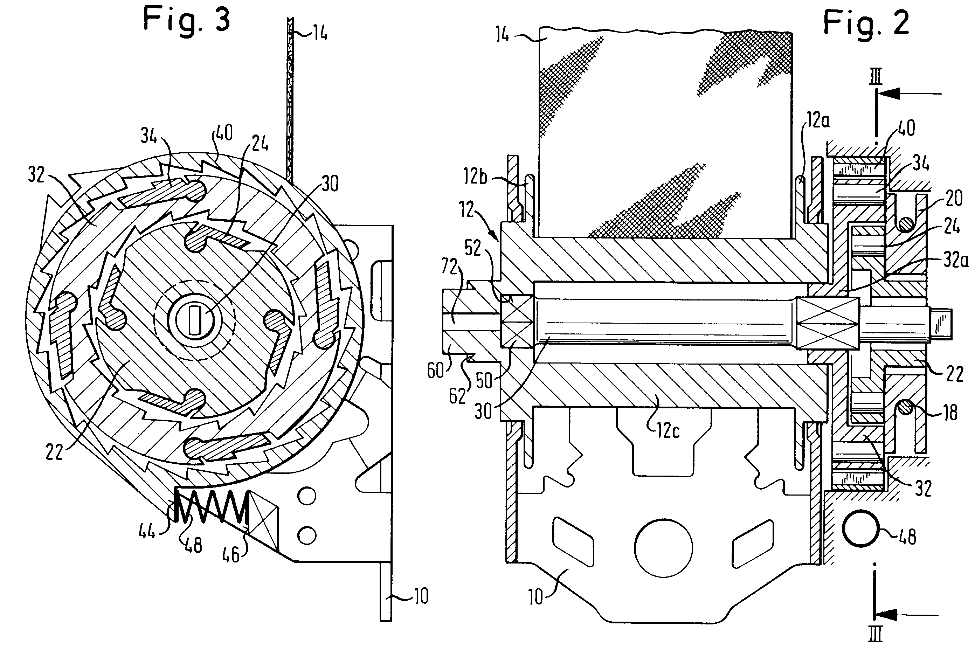

Bei der in den Figuren 1 bis 5 gezeigten Ausführungsform eines Gurtaufrollers mit einem Gurtstraffer ist zwischen den Schenkeln eines lasttragenden Gehäuses 10 eine Gurtspule 12 drehbar gelagert. Auf die Gurtspule 12 wird das Gurtband 14 aufgewickelt.

An der in Fig. 1 linken Seite des Gehäuses 10 befinden sich ein Ansteuermechanismus für die Gurtspulenblockierung und auf der rechten Seite des Gehäuses 10 eine am Ende der Gurtspule 12 angreifende, hier nicht dargestellte Aufrollfeder, welche die Gurtspule 12 in Gurtaufrollrichtung beaufschlagt. Eine Sperrklinke 16 blockiert die Drehung der Gurtspule 12 in Gurtabzugsrichtung fahrzeugsensitiv und/oder gurtbandsensitiv durch Eingriff in eine Sperrverzahnung 11 an der Gurtspule.

Auf der rechten Seite des Gehäuses 10 befinden sich auch die Funktionsteile, die für die Gurtstrafferfunktion und eine sich daran anschließende Energiewandlungsfunktion benötigt werden.

Hierzu gehören ein Zugseil 18, auf das bei Auslösung des Gurtstrafferantriebs eine Zugkraft ausgeübt wird, beispielsweise durch einen pyrotechnischen Kolben/Zylinder-Linearantrieb, eine Trägheitsmasse, eine vorgespannte Feder oder dergleichen. Das Zugseil 18 greift am Umfang einer Seilrolle 20 an, um das es mit mindestens einer Windung herumgelegt ist. Die Seilrolle 20 ist auf einem ersten zylindrischen Absatz eines ersten Klinkenrads 22 angeordnet und triebschlüssig mit diesem gekoppelt.

Das Klinkenrad 22 weist an seiner Umfangsfläche vier in Umfangsrichtung beabstandete, verschwenkbar angeordnete Klinken 24 auf. Die Klinken 24 sind gegenüber einer 90°-Teilung paarweise um eine halbe Zahnteilung versetzt, um einen sicheren Kupplungseingriff zu gewährleisten. Auf einer Scheibe 26 angebrachte Blattfedern 28 belasten die Klinken 24 in bezug auf das Klinkenrad 22 radial nach innen, so daß diese nur bei Überwindung der Federkraft ausschwenken können. Die Scheibe 26 ist konzentrisch am Klinkenrad 22 angeordnet.

Das erste Klinkenrad 22 ist drehbar auf einem dem Gurtstraffer zugewandten Ende eines Torsionsstabes 30 gelagert, der koaxial im Inneren der Gurtspule 22 angeordnet ist.

Ein zweites Klinkenrad 32 ist einteilig mit einem zylindrischen Rad 32a ausgebildet, das mit einer dem ersten Klinkenrad 22 zugeordneten inneren Kupplungsverzahnung das erste Klinkenrad 22 umgreift und mit diesem koaxial um den Torsionsstab 30 angeordnet sowie formschlüssig mit dem Torsionsstab 30 verbunden ist.

Die Klinken 24 sind derart schwenkbar an der Umfangsfläche des ersten Klinkenrads 22 gelagert, daß sie bei einer bestimmten Drehbeschleunigung des ersten Klinkenrads 22 und der damit triebschlüssig verbundenen Seilrolle 20 ausschwenken, in die innere Kupplungsverzahnung des zweiten Klinkenrads 32 eingreifen und somit die Seilrolle 20 über die Klinkenräder 22 und 32 und den Torsionsstab 30 an die Gurtspule 12 koppeln.

Das zweite Klinkenrad 32 weist vier in Umfangsrichtung beabstandete, durch Blattfedern 38 radial nach innen belastete Klinken 34 auf. Diese Klinken 34 sind in gleicher Weise wie die Klinken 24 versetzt. Die Blattfedern 38 sind auf einer am Klinkenrad 32, zu diesem konzentrisch angeordneten Scheibe angebracht.

Um das zweite Klinkenrad 32 herum ist ein eine innere Kupplungsverzahnung aufweisender Ring 40 vorgesehen. Der Ring 40 ist in einer mit dem Gehäuse 10 verbundenen Lagereinrichtung 10a gelagert. Die innere Kupplungsverzahnung und die Klinken 34 sind dadurch derart ausgebildet, daß bei einer bestimmten Drehbeschleunigung des Torsionsstabs 30 und somit des zweiten Klinkenrades 32 in Gurtbandabzugsrichtung die Klinken 34 gegen die Belastung durch die Blattfedern 38 in die innere Kupplungsverzahnung des Rings 40 eingreifen.

Der Ring 40 weist an seiner dem Gehäuse 10 zugewandten Seite einen Steuernocken 42 auf, der bei Drehung des Rings 40 in Gurtbandabzugsrichtung an der Sperrklinke 16 angreift und diese nach unten in eine inaktive Stellung bewegt. Dadurch ist der Blockiermechanismus ausgeschaltet.

Der Ring 40 ist an seiner Umfangsfläche mit einem Anschlagteil 44 versehen. Einen entsprechenden, diesem Anschlagteil 44 zugeordneten Anschlag 46 weist das Gehäuse 10 auf seiner dem Gurtstraffer zugewandten Seite auf. Zwischen dem Anschlagteil 44 und dem Anschlag 46 ist eine Druckfeder 48 angeordnet, durch die der Ring 40 von dem Anschlag 46 fort vorbelastet wird. Bei Einkuppeln des zweiten Klinkenrads 32 in den Ring 40 wird dieser gegen die Kraft der Druckfeder 48 gedreht, bis das Anschlagteil 44 an dem Anschlag 46 anstößt und jede weitere Drehung des Rings 40 blockiert wird. An seinem von dem Gurtstraffer abgewandten axialen Ende ist der Torsionsstab 30 mit einem gerändelten Kopfstück 50 versehen, das in eine passend gestaltete Ausnehmung 52 der Gurtspule 12 formschlüssig eingesetzt ist. Die Gurtspule 12 besteht im wesentlichen aus zwei seitlichen Flanschen 12a, 12b und einem im wesentlichen hohlzylindrischen Mantel 12c, der einen hier nicht dargestellten Schlitz für den Durchgang des auf der Gurtspule 12 aufzuwickelnden Gurtbandes 14 aufweist. Der Torsionsstab 30 erstreckt sich durch den hohlzylindrischen Innenraum des Mantels 12c der Gurtspule. Das Ende des Gurtbandes 14 bildet eine Schlaufe, die auf den Torsionsstab 30 aufgeschoben ist. Der Torsionsstab 30 ist durch das gerändelte Kopfstück 50 drehfest mit der Gurtspule 12 verbunden. Im Ruhezustand sind die Klinken 24 und 34 der Klinkenräder 22 und 32 außer Eingriff mit den jeweils zugeordneten inneren Kupplungsverzahnungen, so daß die Gurtspule 12 mit dem Torsionsstab 30 ungehindert drehbar ist.

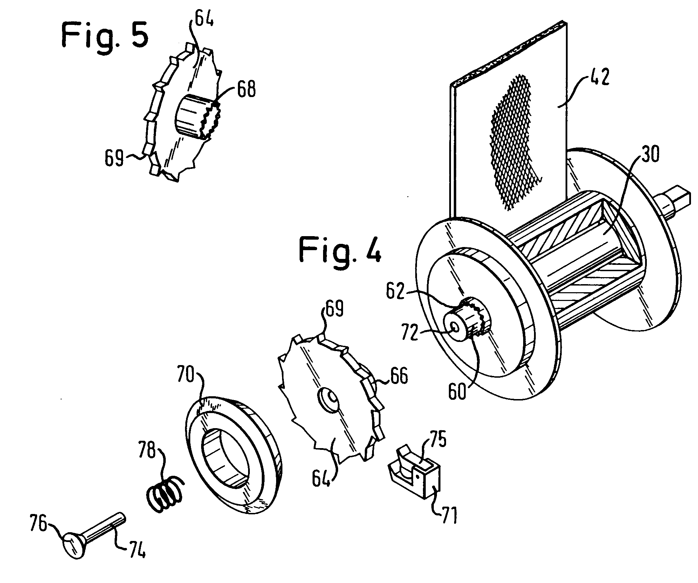

Auf der dem Strafferantrieb entfernt gelegenen Seite weist die Gurtspule 12 einen Fortsatz 60 mit einer Stirnverzahnung 62 auf. Auf dem als Welle dienenden Fortsatz 60 der Gurtspule 12 ist eine Steuerscheibe 64 über eine Nabe 66 gelagert und greift mit einer an der auf die Gurtspule 12 bzw. den Fortsatz 60 gerichteten Stirnseite vorgesehenen Stirnverzahnung 68 in die Stirnverzahnung 62 des Fortsatzes 60 ein. Die Steuerscheibe 64 ist relativ zu dem Fortsatz 60 axial verschieblich, so daß die einander zugeordneten Stirnverzahnungen 62 und 68 außer Eingriff gelangen können und die Steuerscheibe 60 dann relativ zur Gurtspule 12 drehbar ist. Dies ist in Fig. 4 aus Gründen der Übersichtlichkeit sehr vereinfacht dargestellt.

Die Steuerscheibe 64 weist an ihrem Außenumfang eine Steuerverzahnung 69 für den fahrzeugsensitiven Auslösemechanismus auf. An der Steuerscheibe 64 ist eine Trägheitsscheibe 70 über einen vorbestimmten Winkelbereich begrenzt drehbar gelagert. Mit der Steuerverzahnung 69 der Steuerscheibe 64 wirkt in bekannter Weise ein fahrzeugsensitiver Auslösemechanismus zusammen, der mit der Bezugszahl 71 bezeichnet ist und eine auf einer Massekugel aufliegende, am Gehäuse 10 schwenkbar gelagerte, Auslöseklinke 75 umfaßt. Durch die Steuerscheibe ist in bekannter Weise die mit der Sperrverzahnung 11 am Flansch 12a, 12b der Gurtspule 12 zusammenwirkende Sperrklinke 16 (Fig. 1) aktivierbar.

In eine axiale Ausnehmung 72 des Fortsatzes 60 ist ein Stift 74 eingepreßt. Der Stift 74 weist ein verbreitertes Ende 76 auf, das als Anschlagfläche für eine Feder 78 dient. Die Feder 78 liegt an der Stirnfläche 66 der Steuerscheibe 64 an und spannt die Steuerscheibe 64 in Axialrichtung gegen die Stirnverzahnung 62 des Fortsatzes 60. Durch die Stirnverzahnungen 62 und 68 sowie durch den Stift 74 und die Feder 78 ist zwischen der Steuerscheibe 64 und der Gurtspule 12 eine drehmomentbegrenzende Kupplung gebildet.

Bei Aktivierung des Gurtstraffers wird in an sich bekannter Weise über das Zugseil 18 ein Drehmoment am Umfang der Seilrolle 20 ausgeübt. Durch die dann erfolgende Drehung der Seilrolle 20 werden zunächst die Klinken 24 des Klinkenrads 22 in Kupplungseingriff mit der inneren Kupplungsverzahnung des Klinkenrads 32 bewegt, so daß die Seilrolle 20, das Klinkenrad 22, das Klinkenrad 32 und der Torsionsstab 30 fest miteinander gekuppelt sind. Durch den Torsionsstab 30 wird die Drehung der Seilrolle 20 auf die Gurtspule 12 übertragen. Diese wird in Aufrollrichtung angetrieben, so daß die Gurtlose aus dem Sicherheitsgurtsystem herausgezogen wird. Nach beendeter Gurtstraffung bleiben die beiden Klinkenräder 22 und 32 miteinander gekoppelt, so daß der Torsionsstab 30 weiterhin drehfest mit der Seilrolle 20 verbunden ist.

Nach beendeter Gurtstraffung tritt eine Vorverlagerung des Fahrzeuginsassen ein, so daß Gurtband 14 von der Gurtspule 12 abgezogen wird. Die Gurtspule 12, der Torsionsstab 30 und das zweite Klinkenrad 32 werden zusammen mit dem ersten Klinkenrad 22 in Gurtabzugsrichtung gedreht.

Die Klinken 34 des zweiten Klinkenrads 32 schwenken bei genügend hoher Drehbeschleunigung gegen die Belastung durch die Blattfeder 38 aus und greifen in die innere Kupplungsverzahnung des Rings 40 ein. Der Ring 40 wird dadurch gegen die Kraft der Druckfeder 48 verdreht, bis das Anschlagteil 44 des Rings 40 am Anschlag 46 des Gehäuses 10 anstößt und eine weitere Verdrehung des Rings 40 verhindert wird. Dabei greift der Steuernocken 42 an der Sperrklinke 16 an und bewegt diese nach unten in eine inaktive Stellung. Die Gurtspule 12 ist zugleich in Gurtabzugsrichtung über den Torsionsstab 30, das zweite Klinkenrad 32, den Ring 40 und die Abstützung des Anschlagteils 44 am Anschlag 46 gehemmt.

Wenn nun aber nach erfolgter Gurtstraffung eine hohe Last im Sicherheitsgurtsystem auftritt und über das Gurtband 14 bei einer Zugspannung von einigen kN ein entsprechend hohes Drehmoment auf die Gurtspule 12 ausgeübt wird, so beginnt der Torsionsstab 30, sich durch Torsion um seine Achse plastisch zu verformen. Durch diese plastische Verformung wird Energie verzehrt und werden die im Gurtband 14 auftretenden Lastspitzen weitgehend absorbiert. Durch Dimensionierung und Materialwahl können sowohl die Schwelle, ab welcher die plastische Verformung des Torsionsstabes 30 einsetzt, als auch sein weiteres Verhalten und die dadurch erzielte Dämpfungswirkung nahezu beliebig eingestellt werden.

Da die Sperrklinke 16 weiter außer Eingriff mit der Gurtspule 12 gehalten wird, kann diese unbehindert gedreht werden.

Wenn anschließend das Gurtband 14 entlastet wird, lösen sich die Klinken 24 und 34 durch die Federkraft der Blattfedern 28 und 38 aus der entsprechenden Kupplungsverzahnung. Zudem wird der Ring 40 durch die Feder 38 in seine Ausgangsstellung zurückgedreht und dadurch die Aufrollfunktion sowie die fahrzeugsensitive Blockierfunktion wieder freigegeben.

Schon vor Aktivierung des Gurtstraffers ist die Auslöseklinke 75 in die Steuerverzahnung 69 der Steuerscheibe 64 eingerückt. Wegen der Ausbildung der Steuerverzahnung 69 ist dennoch eine Drehung der Steuerscheibe 64 mit der Gurtspule 12 in Aufrollrichtung möglich. Bei der anschließenden Drehung in Abrollrichtung kann jedoch die Steuerscheibe 64 der Drehung der Gurtspule 12 nicht folgen. Durch die drehmomentbegrenzende Kupplung zwischen der Steuerscheibe 64 und der Gurtspule 12 wird die Steuerscheibe 64 von der Gurtspule 12 bzw. von dem Fortsatz 60 entkoppelt. Wenn ein durch die Feder 78 und die Geometrie der Verzahnungen 62, 68 bestimmter Drehmomentwert zwischen Gurtspule 12 und Steuerscheibe 64 überschritten wird, tritt eine axiale Verschiebung der Steuerscheibe 64 auf, bis die Verzahnungen 62 und 68 außer Eingriff miteinander gelangen. Auf diese Weise bleibt der fahrzeugsensitive Auslösemechanismus auch nach dem Gurtstraffervorgang und der sich anschließenden Energiewandlung funktionsfähig.

In Fig. 5 ist die Steuerscheibe 64 in einer anderen perspektivischen Ansicht dargestellt. Dabei ist recht deutlich die Verzahnung 68 zu erkennen, die der Verzahnung 62 des Fortsatzes 60 zugeordnet ist.

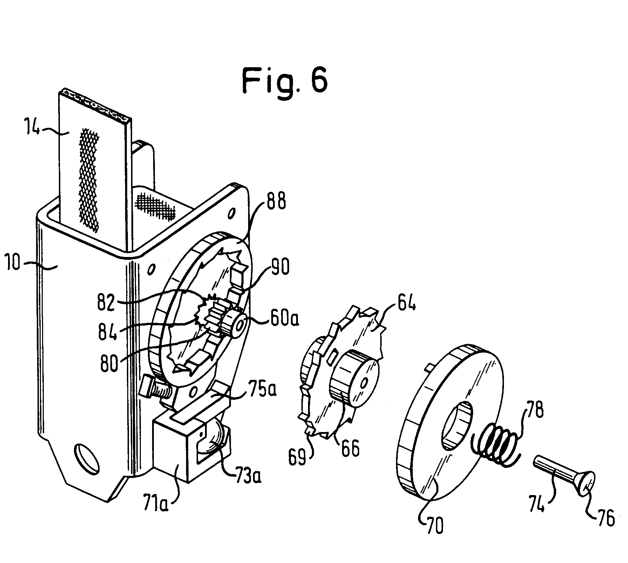

In der Fig. 6 ist eine weitere Ausführungsform der Erfindung dargestellt. Anstelle des Fortsatzes 60 ist ein Zapfen 60a mit einer Außenverzahnung 80 getrennt von der Gurtspule 12 vorgesehen. Der Zapfen 60a mit der Außenverzahnung 80 ist in einer Ausnehmung 82 in der Gurtspule 12 mit entsprechender Innenverzahnung 84 eingefügt und somit drehfest mit der Gurtspule 12 verbunden. Die Steuerscheibe 64 ist wie bei der vorher beschriebenen Ausführungsform auf dem Zapfen 60a gelagert.

Des weiteren ist in Fig. 6 ein Teil des gurtband- und fahrzeugsensitiven Sperrmechanismus zu sehen. Ein Steuerring 88 ist drehbar an der Außenseite des Gehäuses 10 gelagert. Der Steuerring 88 ist mit einer Innenverzahnung 90 versehen und in bekannter Weise zur Aktivierung der Sperrklinke 16 drehbar am Gehäuse 10 gelagert. Die Innenverzahnung 90 wirkt mit einer, hier nicht dargestellten Steuerklinke an der Steuerscheibe 64 zusammen, die die Steuerscheibe 64 bei einer Relativdrehung zwischen Trägheitsscheibe 70 und Steuerscheibe 64 an den Steuerring 88 koppelt und somit die Sperrung der Gurtspule 12 auslöst. Bei dieser Ausführungsform ist die Trägheitsscheibe 70 auf der Nabe 66 der Steuerscheibe 64 gelagert. Der fahrzeugsensitive Sensor 71a umfaßt die auf einer Massekugel 73a aufliegende Auslöseklinke 75a und beruht auf demselben Funktionsprinzip wie der Sensor 71.

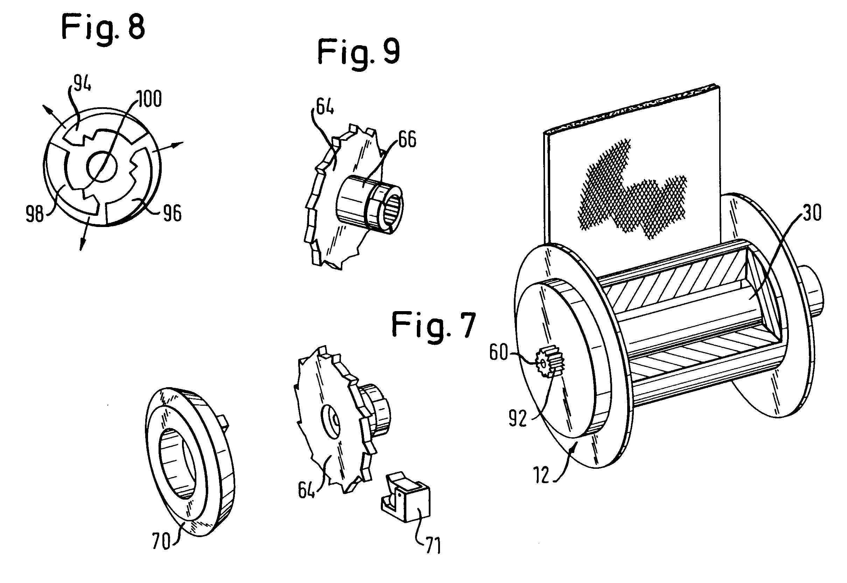

In den Figuren 7 bis 9 ist eine weitere Ausführungsform der drehmomentbegrenzenden Kupplung zwischen der Gurtspule 12 und der Steuerscheibe 64 dargestellt. Der Fortsatz 60 unterscheidet sich von den vorher genannten Ausführungsformen dadurch, daß er eine Außenverzahnung 92 aufweist. Dementsprechend ist auch die Verzahnung an der Steuerscheibe 64 ausgebildet. Drei schwenkbare Klinken 94, 96 und 98 weisen an ihrer Innenseite eine Verzahnung 100 auf, die der Außenverzahnung 92 des Fortsatzes 60 zugeordnet ist. Die Klinken 94, 96 und 98 sind federelastisch ausgebildet und zum Eingriff in die Außenverzahnung 92 des Fortsatzes 60 nach innen vorgespannt. Übersteigt jedoch die radial nach außen wirkende Kraft die Federkraft der Klinken 94 bis 98, so werden die Klinken 94 bis 98 im wesentlichen in Radialrichtung in bezug auf die Steuerscheibe 64 nach außen gedrückt und somit die Steuerscheibe 64 von der Gurtspule 12 entkoppelt.

Mittels der drehmomentbegrenzenden Kupplung wird noch ein weiterer Effekt erreicht. Bei Auslösung des an die Gurtspule 12 angeschlossenen Gurtstraffers wird die Gurtspule 12 entgegen der Gurtbandabzugsrichtung stark beschleunigt. Neuerdings werden leistungsstärkere Gasgeneratoren verwendet, die eine wirksamere Beseitigung der Gurtlose ermöglichen. Die Kopplung der Trägheitsscheibe 70, die den gurtbandsensitiven Sperrmechanimus auslöst, ist für Drehbeschleunigungswerte von ca. 0,5 g bis 2 g ausgelegt. Beim Straffervorgang werden aber weit höhere Drehbeschleunigungen erreicht, so daß eine Beschädigung der Auslösevorrichtung des Sperrmechanismus möglich ist, insbesondere bei Verwendung von leistungsstarken Gasgeneratoren. Durch die in beiden Drehrichtungen drehmomentbegrenzende Kupplung wird auf einfache Weise die Steuerscheibe 64 auch zu Beginn der Gurtstraffung von der Gurtspule 12 entkoppelt, so daß die Funktionsfähigkeit der Auslösevorrichtung unter allen Umständen erhalten bleibt.

## Patentansprüche

1. Sicherheitsgurtaufroller mit einer drehbar in einem Gehäuse (10) gelagerten Gurtspule (12) und einem Strafferantrieb (18, 19, 20) zur Drehung der Gurtspule (12) in Aufwickelrichtung, wobei ein axiales Ende eines Torsionsstabes (30) drehfest an die Gurtspule (12) angeschlossen ist und nach erfolgter Gurtstraffung der Torsionsstab (30) an seinem anderen axialen Ende durch einen Blockiermechanismus (32, 34, 40, 44, 46) gegen Drehung in Abwickelrichtung am Gehäuse (10) blockiert sowie durch Drehung der Gurtspule (12) unter Last zwischen seinen axialen Enden tordierbar ist, dadurch gekennzeichnet, daß der Strafferantrieb (18, 19, 20) an dem anderen axialen Ende des Torsionsstabes (30) angreift und daß der Blockiermechanismus (32, 34, 40, 44, 46) eine Klinkenkupplung (32, 34, 40) aufweist.

2. Sicherheitsgurtaufroller nach Anspruch 1, mit einem fahrzeugsensitiven Sperrmechanismus (16, 64, 71a, 73a, 75a), der eine an der Gurtspule (12) begrenzt drehbare Steuerscheibe (64), eine Sperrverzahnung (11) an der Gurtspule (12) und eine Sperrklinke (16) aufweist, dadurch gekennzeichnet, daß die Steuerscheibe (64) über eine drehmomentbegrenzende Kupplung (60, 62, 68, 74, 78; 92 bis 106) an die Gurtspule (12) angeschlossen ist.

3. Sicherheitsgurtaufroller nach Anspruch 2, dadurch gekennzeichnet, daß die Kupplung durch eine erste, an der Gurtspule (12) angebrachte Verzahnung (62, 92) und eine zweite, mit der Steuerscheibe (64) gekoppelte Verzahnung (68, 100) gebildet ist, die durch Federkraft mit der ersten Verzahnung (62, 92) in Eingriff gehalten ist.

4. Sicherheitsgurtaufroller nach Anspruch 2 oder 3, dadurch gekennzeichnet, daß die Steuerscheibe (64) in bezug auf die Gurtspule (12) in Axialrichtung federbelastet ist und die erste Verzahnung und die zweite Verzahnung jeweils durch eine Stirnverzahnung (62, 68) gebildet sind.

5. Sicherheitsgurtaufroller nach Anspruch 4, dadurch gekennzeichnet, daß die Steuerscheibe (64) auf einem mit der Gurtspule (12) fest verbundenen Stift (74) axial verschiebbar gelagert ist und eine Feder (78) zwischen einem verbreiterten Ende (76) des Stifts (74) und der Steuerscheibe (64) zur Federbelastung der Steuerscheibe (64) in Axialrichtung gespannt ist.

6. Sicherheitsgurtaufroller nach Anspruch 2 oder 3, dadurch gekennzeichnet, daß an der Gurtspule (12) eine Außenverzahnung (92) vorgesehen ist, in die eine im wesentlichen in Radialrichtung federbelastete, nach außen verschwenkbare Innenverzahnung (100) der Steuerscheibe (64) eingreift.

7. Sicherheitsgurtaufroller nach einem der vorstehenden Ansprüche, dadurch gekennzeichnet, daß der Strafferantrieb umfaßt:
- eine Seilrolle (20), an deren Außenumfang ein Zugseil (18) angreift;
- ein drehfest mit der Seilrolle (20) gekoppeltes Klinkenrad (22), an dessen Außenumfang wenigstens eine Kupplungsklinke (24) auswärts verschwenkbar gelagert ist; und
- ein drehfest an das dem Strafferantrieb zugeordnete, erste axiale Ende des Torsionsstabes (30) angeschlossenes Kupplungsrad (32a) mit einer Kupplungsverzahnung, in welche die Kupplungsklinke (24) selektiv einsteuerbar ist.

8. Sicherheitsgurtaufroller nach einem der vorstehenden Ansprüche, dadurch gekennzeichnet, daß der Blockiermechanismus umfaßt:
- ein drehfest mit dem ersten axialen Ende des Torsionsstabes (30) verbundenes Klinkenrad (32), an dessen Außenumfang wenigstens eine Blockierklinke (34) auswärts verschwenkbar gelagert ist; und
- einen am Gehäuse (10) abgestützten Ring (40) mit einer Sperrverzahnung, in welche die Blockierklinke selektiv einsteuerbar ist.

9. Sicherheitsgurtaufroller nach den Ansprüchen 7 und 8, dadurch gekennzeichnet, daß das drehfest an das erste axiale Ende des Torsionsstabes (30) angeschlossene Kupplungsrad (32a) einteilig mit dem Klinkenrad (32) ausgebildet ist.

10. Sicherheitsgurtaufroller nach Anspruch 8 oder 9, dadurch gekennzeichnet, daß der Ring (40) durch einen Anschlag (46) begrenzt am Gehäuse verdrehbar gelagert ist und einen Steuernocken (42) aufweist, der an der Sperrklinke (16) angreift und diese bei in Richtung gegen den Anschlag (46) verdrehtem Ring (40) außer Eingriff mit der Sperrverzahnung (11) der Gurtspule (12) hält.

11. Sicherheitsgurtaufroller nach einem der vorstehenden Ansprüche, dadurch gekennzeichnet, daß die Gurtspule (12) hohl ausgebildet und der Torsionsstab (30) koaxial in der Gurtspule (12) aufgenommen ist.

## Claims

1. A seat belt retractor having a belt reel (12) rotatably mounted in a housing (10) and a belt tensioner drive (18, 19, 20) for rotating the belt reel (12) in the take-up direction, an axial end of a torsion bar (30) being connected non-rotatably to the belt reel (12) and the torsion bar (30), after belt tensioning has taken place, being blocked non-rotatably in withdrawal direction on the housing (10) due to a blocking mechanism (32, 34, 40, 44, 46) and under load being able to be twisted between its axial ends due to rotation of the belt reel (12), characterized in that the belt tensioner drive (18, 19, 20) engages at the other axial end of the torsion bar (30) and in that the blocking mechanism (32, 34, 40, 44, 46) comprises a pawl coupling (32, 34, 40).

2. Safety belt retractor according to claim 1, comprising a vehicle-sensitive locking mechanism (16, 64, 71a, 73a, 75a) provided with a control disk (64) which is rotabable in limited manner relatively to the belt reel (12), a locking toothing (11) on the belt reel (12) and a locking pawl (16), characterized in that the control disk (64) is connected to said belt reel (12) via a torque-limiting coupling (60, 62, 68, 74, 78; 92 through 106).

3. Safety belt retractor according to claim 2, characterized in that the coupling is formed by a first toothing (62, 92) provided on the belt reel (12) and a second toothing (68, 100) coupled to the control disk (64), said second toothing being held engaged with the first toothing (62, 92) by spring force.

4. Safety belt retractor according to claim 2 or claim 3, characterized in that the control disk (64) is spring loaded in the axial direction with respect to said belt reel (12) and said first toothing and said second toothing are each formed by a spur gear toothing (62, 68).

5. Safety belt retractor according to claim 4, characterized in that the control disk (64) is mounted to be axially shiftable on a pin (74) firmly connected to said belt reel (12) and a spring (78) is tensioned between a widened end (76) of said pin (74) and said control disk (64) to spring-load said control disk (64) in an axial direction.

6. Safety belt retractor according to claim 2 or claim 3, characterized in that said belt reel (12) is provided with an outer toothing (92) which is engaged by an inner toothing (100) of said control disk (64), which toothing is spring-loaded substantially in radial direction and is swivable outwardly.

7. Safety belt retractor according to any one of the preceding claims, characterized in that the tensioner drive comprises:
- a pulley (20), the circumference of which is engaged by a pulling cable (18);
- a ratchet wheel (22) coupled non-rotatably to the pulley (20) and at the circumference of which at least one coupling pawl (24) is mounted which can be swiveled outwardly; and
- a coupling wheel (32a) coupled non-rotatably to the first axial end of said torsion bar (30), which is assigned to said belt tensioner drive, and provided with a coupling toothing in which the coupling pawl (24) can be engaged selectively.

8. Safety belt retractor according to any one of the preceding claims, characterized in that the blocking mechanism comprises:
- a ratchet wheel (32) coupled non-rotatably to the first axial end of the torsion rod (30) and at the circumference of which at least one blocking pawl (34) is mounted so that it can be swiveled outwardly; and
- a ring (40) supported at the housing (10) and provided with a locking toothing in which a blocking pawl can be selectively engaged.

9. Safety belt retractor according to claim 7 and claim 8, characterized in that the coupling wheel (32a) connected non-rotatably to the first axial end of the torsion rod (30) is formed integral with the ratchet wheel (32).

10. Safety belt retractor according to claim 8 or claim 9, characterized in that the ring (40) is mounted at the housing for limited rotation due to a stop (46) and comprises a control cam (42) which engages the locking pawl (16) and holds said pawl out of engagement with the locking toothing (11) of the belt reel (12) when the ring (40) is rotated in the direction toward the stop (46).

11. Safety belt retractor according to any one of the preceding claims, characterized in that the belt reel (12) is formed hollow and the torsion bar (30) is disposed coaxially within the belt reel (12).

## Revendications

1. Enrouleur de ceinture de sécurité comportant une bobine de sangle (12) montée tournante dans un boîtier (10) et un mécanisme tendeur (18, 19, 20) destiné à faire tourner la bobine (12) dans le sens de l'enroulement, dans lequel une extrémité axiale d'une barre de torsion (30) est raccordée solidaire en rotation à la bobine (12) et après tension de la sangle, la barre de torsion (30) est bloquée sur le boîtier (10) à son autre extrémité axiale par un mécanisme de blocage (32, 34, 40, 44, 46) contre une rotation dans le sens du dévidement et peut être tordue sous charge, entre ses extrémités axiales, par rotation de la bobine (12), caractérisé en ce que le mécanisme tendeur (18, 19, 20) agit sur l'autre extrémité axiale de la barre de torsion (30) et en ce que le mécanisme de blocage (32, 34, 40, 44, 46) comporte un accouplement à cliquet (32, 34, 40).

2. Enrouleur de ceinture de sécurité selon la revendication 1, avec un mécanisme d'arrêt (16, 64, 71a, 73a, 75a) réagissant au véhicule, qui comporte un disque de commande (64) tournant de manière limitée sur la bobine de sangle (12), une denture d'arrêt (11) sur la bobine (12) et un cliquet d'arrêt (16), caractérisé en ce que le disque de commande (64) est raccordé à la bobine (12) par un accouplement (60, 62, 68, 74, 78 ; 92 à 106) limitant le couple de rotation.

3. Enrouleur de ceinture de sécurité selon la revendication 2, caractérisé en ce que l'accouplement est formé par une première denture (62, 92), montée sur la bobine (12), et une deuxième denture (68, 100), accouplée au disque de commande (64), qui est maintenue en prise avec la première denture (62, 92) par la force d'un ressort.

4. Enrouleur de ceinture de sécurité selon la revendication 2 ou 3, caractérisé en ce que le disque de commande (64) est soumis axialement à l'action d'un ressort par rapport à la bobine (12) et la première denture ainsi que la deuxième denture sont formées chacune par une denture frontale (62, 68).

5. Enrouleur de ceinture de sécurité selon la revendication 4, caractérisé en ce que le disque de commande (64) est monté de manière à pouvoir coulisser axialement sur une tige (74) solidaire de la bobine (12) et en ce qu'un ressort (78) est tendu en direction axiale entre une extrémité (76) élargie de la tige (74) et le disque de commande (64), pour agir sur le disque de commande (64).

6. Enrouleur de ceinture de sécurité selon la revendication 2 ou 3, caractérisé en ce qu'il est prévu sur la bobine (12) une denture extérieure (92) dans laquelle engrène une denture intérieure (100) du disque de commande (64), pivotant vers l'extérieur, soumise à l'action d'un ressort dans la direction sensiblement radiale.

7. Enrouleur de ceinture de sécurité selon l'une des revendications précédentes, caractérisé en ce que le mécanisme tendeur comprend ;
- une poulie de câble (20) sur le pourtour extérieur de laquelle agit un câble de traction (18) ;
- une roue à cliquet (22) accouplée solidaire en rotation à la poulie de câble (20), sur le pourtour extérieur de laquelle est monté au moins un cliquet d'accouplement (24) pivotant vers l'extérieur ; et
- une roue d'accouplement (32a) accouplée solidaire en rotation à la première extrémité axiale de la barre de torsion (30) associée au mécanisme tendeur avec une denture d'accouplement dans laquelle le cliquet d'accouplement (24) peut s'engager, commandé de manière sélective.

8. Enrouleur de ceinture de sécurité selon l'une des revendications précédentes, caractérisé en ce que le mécanisme de blocage comprend :
- une roue à cliquet (32) reliée solidaire en rotation avec la première extrémité axiale de la barre de torsion (30), sur le pourtour extérieur de laquelle est monté au moins un cliquet de blocage (34) pivotant vers l'extérieur ; et
- un anneau (40) prenant appui sur le boîtier (10) avec une denture d'arrêt dans laquelle le cliquet de blocage peut s'engager, commandé de manière sélective.

9. Enrouleur de ceinture de sécurité selon les revendications 7 et 8, caractérisé en ce que la roue d'accouplement (32a), raccordée solidaire en rotation à la première extrémité axiale de la barre de torsion (30), est réalisée d'une seule pièce avec la roue à cliquet (32).

10. Enrouleur de ceinture de sécurité selon la revendication 8 ou 9, caractérisé en ce que l'anneau (40) est monté tournant sur le boîtier, limité par une butée (46), et comporte une came de commande (42) qui agit sur le cliquet d'arrêt (16) et maintient celui-ci désengagé de la denture d'arrêt (11) de la bobine (12), lorsque l'anneau (40) est tourné en direction de la butée (46).

11. Enrouleur de ceinture de sécurité selon l'une des revendications précédentes, caractérisé en ce que la bobine (12) est creuse et la barre de torsion (30) est logée coaxialement dans la bobine (12).
